(19) Europäisches Patentamt
European Patent Office
Office européen des brevets

(11) Veröffentlichungsnummer: **0 044 029**
**A1**

(12) # EUROPÄISCHE PATENTANMELDUNG

(21) Anmeldenummer: **81105286.9**

(51) Int. Cl.³: **C 01 B 21/14**

(22) Anmeldetag: **08.07.81**

(30) Priorität: **11.07.80 DE 3026293**

(43) Veröffentlichungstag der Anmeldung:
**20.01.82 Patentblatt 82/3**

(84) Benannte Vertragsstaaten:
**AT CH DE FR GB IT LI SE**

(71) Anmelder: **RIEDEL-DE HAEN AKTIENGESELLSCHAFT**
**Wunstorfer Strasse 40**
**D-3016 Seelze 1(DE)**

(72) Erfinder: **Scholz, Eugen, Dr.**
**Am Sperrtor 40**
**D-3008 Garbsen(DE)**

(72) Erfinder: **Sievert, Wolfgang, Dr.**
**Zur Maate 7**
**D-3050 Wunstorf(DE)**

(74) Vertreter: **Meyer-Dulheuer, Karl-Hermann, Dr. et al,**
**HOECHST Aktiengesellschaft Zentrale Patentabteilung**
**Postfach 80 03 20**
**D-6230 Frankfurt/Main 80(DE)**

(54) **Verfahren zur Herstellung von Hydroxylammoniumperchlorat.**

(57) Hydroxylammoniumperchlorat wird hergestellt durch Umsetzung eines perchloratfreien Hydroxylammoniumsalzes mit einer Perchlorationen liefernden Verbindung; die Reaktion wird in wäßriger Lösung mit Hilfe eines Kationenaustauschers durchgeführt. Die Umsetzung erfolgt im Gleichstromverfahren oder vorteilhaft im Gegenstromverfahren. Das Hydroxylammoniumperchlorat wird in hoher Ausbeute und mit großer Reinheit erhalten. Es eignet sich als Oxidationsmittel in Treibstoffen.

**EP 0 044 029 A1**

Croydon Printing Company Ltd.

RIEDEL-DE HAEN AKTIENGESELLSCHAFT HOE 80/D 007 Dr.EG/Wa

Verfahren zur Herstellung von Hydroxylammoniumperchlorat

Die Erfindung bezieht sich auf ein Verfahren zur Herstellung von Hydroxylammoniumperchlorat durch Umsetzung eines perchloratfreien Hydroxylammoniumsalzes mit einer Perchlorationen liefernden Verbindung.

Die Herstellung von Hydroxylammoniumperchlorat (HAP) ist bereits seit langem bekannt. Schon 1956 wurde die Umsetzung von Hydroxylammoniumhydrochlorid oder -sulfat mit Bariumperchlorat beschrieben, die in Gegenwart von absolutem Ethanol als Lösemittel durchgeführt wurde und nach Umkristallisieren eine Ausbeute von 55 Prozent HAP in Form weißer Kristalle mit einem Schmelzpunkt von 87,5 bis 89,0°C ergab (vgl. US-Patentschrift 2 768 874). Ein ähnliches Verfahren beruht auf der Umsetzung von Hydroxylammoniumhydrochlorid oder -sulfat mit Natriumperchlorat in alkoholischer, vorzugsweise methanolischer Lösung und Entfernung der Nebenprodukte durch Ausfällung mit einem Ether (vgl. US-Patentschrift 3 420 621). Beide bekannten Verfahren haben den Nachteil, daß sie unter Verwendung eines organischen Lösemittels durchgeführt werden, das rückgewonnen werden muß, und daß das HAP durch unvollständig entfernte Nebenprodukte verunreinigt ist.

Ferner ist bekannt, daß HAP auch durch Reaktion von Hydroxylammoniumsulfat mit Bariumperchlorat in wäßrigem Medium hergestellt werden kann (vgl. Chemical Abstracts Vol. 56 (1962), Seite 2142). Dieses Verfahren hat den Nachteil, daß überschüssiges Hydroxylammoniumsulfat durch Rücktitration mit Bariumcarbonat vorsichtig entfernt werden muß.

Aufgabe der Erfindung ist die Bereitstellung eines Ver-

BAD ORIGINAL

fahrens zur Herstellung von HAP mit großer Reinheit und in hoher Ausbeute, das ohne großen technischen Aufwand durchführbar ist.

Die Erfindung betrifft ein Verfahren zur Herstellung von Hydroxylammoniumperchlorat durch Umsetzung eines perchloratfreien Hydroxylammoniumsalzes mit einer Perchlorationen liefernden Verbindung und ist dadurch gekennzeichnet, daß die Umsetzung in wäßriger Lösung mit Hilfe eines Kationenaustauschers durchgeführt wird.

Das erfindungsgemäße Verfahren wird als Gleichstromverfahren, bei dem Beladen des Austauschers und Eluieren in der gleichen Strömungsrichtung erfolgen, oder vorzugsweise als Gegenstromverfahren, bei dem Beladen und Eluieren mit entgegengesetzten Strömungsrichtungen erfolgen, durchgeführt. Besonders vorteilhaft ist die Durchführung des Verfahrens mit mehreren hintereinandergeschalteten Säulen, die abwechselnd im Gleichstrom und im Gegenstrom betrieben werden.

Als Ausgangsmaterial wird ein handelsübliches Hydroxylammoniumsalz verwendet, z.B. Hydroxylammoniumsulfat oder Hydroxylammoniumhydrochlorid. Dieses wird mit einer Perchlorationen liefernden Verbindung umgesetzt, d.h. einer Verbindung der Formel

$$X\,ClO_4 \quad \text{oder} \quad Y(ClO_4)_2 ,$$

wobei X ein Wasserstoffatom oder ein Alkalimetallatom und Y ein Erdalkalimetallatom bedeutet. Geeignete Verbindungen sind Perchlorsäure, die vorzugsweise in Form einer 5 bis 20 gewichtsprozentigen wäßrigen Lösung verwendet wird, Kaliumperchlorat, Natriumperchlorat, Calciumperchlorat und Bariumperchlorat.

Der erfindungsgemäß verwendete Kationenaustauscher ist

BAD ORIGINAL

vorzugsweise ein stark saurer Kationenaustauscher, insbesondere ein Kationenaustauscher mit Carboxylgruppen oder mit Sulfonsäuregruppen auf Kunstharzbasis wie Phenolsulfonsäurekondensat oder Styrolsulfonsäurepolymerisat. Solche Kationenaustauscher sind im Handel erhältlich. Die Verwendung von Kationenaustauschern bei der Synthese von HAP hat den Vorteil, daß die resultierende wäßrige HAP-Lösung frei von Sekundärverunreinigungen ist. Sie enthält weder Anionen aus dem Hydroxylammoniumsalz noch Kationen aus der Perchloratkomponente. Auch Metallionen, die in den Ausgangsmaterialien enthalten sein können, gelangen nicht in das Endprodukt.

Das erfindungsgemäße Verfahren wird im wesentlichen in zwei Stufen durchgeführt: Zunächst wird nämlich der Austauscher mit einem perchloratfreien Hydroxylammoniumsalz, das in Wasser gelöst ist, beladen, und anschließend wird der Austauscher mit einer wäßrigen Lösung einer Perchlorationen liefernden Verbindung eluiert. Als Eluat erhält man eine wäßrige HAP-Lösung mit einer Konzentration von 10 bis 15 Gewichtsprozent, die durch Entfernen des Wassers unter schonenden Bedingungen, d.h. bei einer Temperatur von 30 bis 70°C und unter einem Druck von 20 bis 150 mbar, konzentriert werden kann. Nach dem Eluieren ist ein Nachwaschen mit Wasser in der gleichen Strömungsrichtung angebracht. Aus Eluat und Waschwasser läßt sich HAP in einer Gesamtausbeute von mindestens 98 Gewichtsprozent (bezogen auf das perchlorathaltige Elutionsmittel) gewinnen. In fester Form wird HAP durch Umkristallisieren, vorzugsweise unter vermindertem Druck, erhalten; die Kristalle weisen einen Schmelzpunkt im Bereich von 88 bis 89°C auf (Differential-Thermoanalyse) und haben einen Reinheitsgrad von mindestens 99 Prozent.

Das erfindungsgemäß hergestellte HAP eignet sich insbesondere als Oxidationsmittel in Treibstoffen fester oder flüssiger Form.

Beispiel 1

Eine zylindrische Ionenaustauschersäule mit einem Durchmesser von 8 cm und einer Länge von 50 cm wird mit 2 l eines handelsüblichen, stark sauren Kationenaustauschers auf Basis eines Styrolsulfonsäurepolymerisats gefüllt; die Säule hat eine Gesamtkapazität von 4,8 Val. Zum Beladen des Austauschers wird eine Lösung von 492 g (6 Val) Hydroxylammoniumsulfat in 4 l Wasser während eines Zeitraums von 2 Stunden von oben nach unten über den Austauscher gegeben. Danach wird der Austauscher mit Wasser nachgewaschen, bis die abfließende Flüssigkeit sulfatfrei ist. Zum Eluieren wird eine Lösung von 400 g (3,28 Val) Natriumperchlorat in 2 l Wasser während eines Zeitraumes von 3 Stunden von oben nach unten über den Austauscher gegeben. Anschließend wird der Austauscher in der gleichen Strömungsrichtung mit 2 l Wasser nachgewaschen. Das Waschwasser wird mit dem Eluat vereinigt; das erhaltene Gemisch enthält 430 g (3,22 Val; 98 % der Theorie) HAP; Sulfationen und Natriumionen sind im Eluat nicht nachweisbar.

Beispiel 2

Beispiel 1 wird wiederholt, wobei statt der Natriumperchloratlösung nun 2 l einer 17,5prozentigen wäßrigen Perchlorsäure (3,5 Val) eingesetzt werden. Die aus Eluat und Waschwasser erhaltene Lösung enthält 465 g (3,5 Val; 99,6% der Theorie) HAP; Sulfationen sind im Eluat nicht nachweisbar.

Beispiel 3

Beispiel 1 wird wiederholt, wobei statt der Natriumperchloratlösung nun eine Lösung von 400 g Perchlorsäure (17,5prozentig) und 112 g Calciumoxid in 2 l Wasser verwendet wird; diese Lösung enthält 4 Val Calciumperchlorat. Die aus Eluat und Waschwasser erhaltene Lösung enthält 530 g (3,97 Val; 99 % der Theorie) HAP;

Calciumionen und Sulfationen sind im Eluat nicht nachweisbar. Die HAP-Lösung wird in einem Rotationsverdampfer bei einer Temperatur von 40°C zu einem Kristallbrei eingedampft. Das nach Umkristallisieren vorliegende HAP zeigt einen Schmelzpunkt von 88 °C und einen Reinheitsgrad von 99 %.

Beispiel 4

In einer Austauscheranlage, die aus 2 zylindrischen Säulen mit einem Durchmesser von je 1 m und einer Höhe von je 3,2 m besteht, wird jede Säule mit 2000 l eines handelsüblichen, stark sauren Kationenaustauschers auf Basis eines Styrolsulfonsäurepolymerisats gefüllt; die Anlage hat eine Gesamtkapazität von 9,6 kVal. Zum Beladen des Austauschers wird eine Lösung von 1000 kg (12,2 kVal) Hydroxylammoniumsulfat in 6000 l Wasser derart über die hintereinandergeschalteten Säulen gepumpt, daß die erste Säule von oben nach unten und die zweite Säule von unten nach oben beladen wird. Danach wird der Austauscher mit Wasser nachgewaschen, bis die abließende Flüssigkeit sulfatfrei ist. Zum Eluieren wird eine Lösung von 587 kg (4,8 kVal) Natriumperchlorat in 3000 l Wasser während eines Zeitraumes von 2 Stunden derart über beide Säulen gepumpt, daß die Lösung auf den Kopf der zweiten Säule aufgegeben und am Fuß abgenommen und dann auf den Kopf der ersten Säule aufgegeben und an ihrem Fuß abgenommen wird. Anschließend wird der Austauscher in der gleichen Strömungsrichtung mit 3000 l Wasser gewaschen. Das Eluat wird mit dem Waschwasser vereinigt; das Gemisch enthält 635 kg (4,76 kVal; 99% der Theorie) HAP; Sulfationen und Natriumionen sind im Eluat nicht nachweisbar.
Dieser Vorgang des Beladens und Eluieren ist ohne Ausbeuteverminderung vielfach wiederholbar.

PATENTANSPRÜCHE:

1. Verfahren zur Herstellung von Hydroxylammoniumperchlorat durch Umsetzung eines perchloratfreien Hydroxylammoniumsalzes mit einer Perchlorationen liefernden Verbindung, dadurch gekennzeichnet, daß die Umsetzung in wäßriger Lösung mit Hilfe eines Kationenaustauschers durchgeführt wird.

2. Verfahren nach Anspruch 1, dadurch gekennzeichnet, daß die Umsetzung im Gegenstromverfahren durchgeführt wird.

0044029

Europäisches Patentamt

# EUROPÄISCHER RECHERCHENBERICHT

Nummer der Anmeldung
EP 81 10 5286

| EINSCHLÄGIGE DOKUMENTE | | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | |
| X | US - A - 3 508 864 (W.W. THOMPSON et al.)<br>* Spalte 2, Zeilen 26-36; Beispiel III *<br>---- | 1 | C 01 B 21/14 |
| | | | RECHERCHIERTE SACHGEBIETE (Int. Cl.³)<br>C 01 B 21/14 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Den Haag | 22-10-1981 | BREBION |